# FASCICULE DE BREVET EUROPEEN

(11) **EP 4 574 484 B1**
(45) Date de publication et mention de la délivrance du brevet: **04.02.2026**
(21) Numéro de dépôt: 24222082.0
(22) Date de dépôt: 20.12.2024
(51) Int. Cl.: B60J 5/04, B60J 10/32, B60J 10/76, B60J 10/79

(54) **PORTE A CADRE CACHE POUR UN VEHICULE AUTOMOBILE**
TÜR MIT VERSTECKTEM RAHMEN FÜR EIN KRAFTFAHRZEUG
HIDDEN FRAME DOOR FOR A MOTOR VEHICLE

(30) Priorité: 22.12.2023 FR 2315180
(43) Date de publication de la demande: 25.06.2025
(73) Titulaire: HUTCHINSON, 75008 Paris (FR)
(72) Inventeur: BLOTTIAU, Olivier, 45200 AMILLY (FR); LAJOUX, Cyril, 45700 VIMORY (FR)
(74) Mandataire: Gevers & Orès

(56) Documents cités:
- EP-B1- 0 021 069
- US-A1- 2020 130 488

## Description

### Domaine technique de l'invention

L'invention concerne une porte à cadre caché pour un véhicule, en particulier automobile, ainsi qu'un véhicule, en particulier automobile, comportant une telle porte.

### Arrière-plan technique

De manière générale, une porte de véhicule comprend un bâti comportant un caisson inférieur, et une vitre qui est mobile depuis une position inférieure dans laquelle elle est au moins en partie logée dans le caisson inférieur, et une position supérieure dans laquelle elle est majoritairement située au-dessus du caisson. Un exemple est illustré dans le document US 2020/130488 A1.

Dans le domaine des véhicules, en particulier automobile, il existe trois types de porte. Selon un premier type de porte, le bâti de la porte comprend un cadre périphérique supérieur qui est destiné à entourer la vitre lorsqu'elle est dans sa position supérieure. Ce cadre comprend en général deux montants verticaux reliés par une traverse supérieure, les montants verticaux s'étendant entre le caisson et la traverse supérieure. Une porte selon ce premier type est appelée « porte à cadre (visible) ». Dans le domaine automobile, on considère par ailleurs qu'un aspect « flush » est un aspect esthétique. Cet aspect est obtenu en alignant entre elles deux faces externes ou extérieures (visibles par un utilisateur à l'extérieur du véhicule) de deux éléments adjacents (de carrosserie et/ou de vitre), sans pièce intermédiaire qui serait intercalée entre ces faces. Cela permet d'avoir une continuité de ces faces et donc une impression visuelle de surface lisse et aérodynamique.

Le premier type de porte, à cadre visible, est très répandu mais son inconvénient est qu'il n'est pas possible d'obtenir un effet « flush » avec ce type de porte, à cause de son cadre.

Selon un deuxième type de porte, le bâti de la porte ne comprend pas de cadre périphérique supérieur. Une porte selon ce second type est appelée « porte sans cadre ». L'avantage de ce type de porte est qu'il est possible d'obtenir un effet « flush » par exemple avec un enjoliveur adjacent à la vitre lorsqu'elle est en position supérieure.

Selon un troisième type de porte, le bâti de la porte comprend un cadre périphérique supérieur mais ce cadre est destiné à être caché. Le cadre peut être caché par la vitre, par des enjoliveurs, ou par la coulisse. Le cadre est par exemple caché par la vitre lorsqu'elle est dans sa position supérieure. La vitre comporte une face extérieure orientée vers l'extérieur de la porte, et une face intérieure qui est orientée vers l'intérieur de la porte et qui recouvre le cadre pour le cacher des utilisateurs situés à l'extérieur du véhicule. Une porte selon ce troisième type est appelée « porte à cadre cachée » ou « porte à cadre caché avec aspect porte sans cadre », et la présente demande concerne une telle porte.

Une vitre comprend un bord périphérique dont une partie s'étend le long d'un montant vertical du cadre du bâti. Pour guider la vitre dans ses déplacements, le long de ce montant vertical, il est connu de prévoir un guide vitre sur la vitre et une coulisse sur le montant vertical, le guide vitre coopérant par coulissement avec la coulisse.

Le guide vitre est fixé sur la face intérieure de la vitre et s'étend le long d'une partie du bord périphérique de la vitre et du montant vertical.

La coulisse s'étend en général tout autour du cadre notamment pour assurer une étanchéité entre la vitre et le cadre en position supérieure. Une partie de la coulisse est fixée sur le montant vertical et coopère avec le guide vitre pour guider la vitre.

La présente invention propose un perfectionnement à ce type de porte à cadre caché, qui permet notamment de faciliter l'assemblage de la porte.

### Résumé de l'invention

La présente invention propose une porte à cadre caché pour un véhicule, en particulier automobile, cette porte comportant :
- un bâti comportant un caisson inférieur et un cadre périphérique supérieur qui comprend un montant vertical,
- une vitre mobile depuis une position inférieure dans laquelle elle est au moins en partie logée dans le caisson inférieur, et une position supérieure dans laquelle le cadre est caché par la vitre, la vitre comportant une face extérieure orientée vers l'extérieur de la porte, une face intérieure orientée vers l'intérieur de la porte, et un bord périphérique, une partie de la face intérieure recouvrant entièrement le montant vertical et une partie du bord périphérique s'étendant le long de ce montant lorsque la vitre est dans sa position supérieure,

- un guide vitre fixé sur la face intérieure de la vitre et s'étendant le long de cette partie du bord périphérique, et
- une coulisse dont une partie est fixée sur le montant vertical et apte à coopérer avec le guide vitre pour guider la vitre lorsqu'elle se déplace,
caractérisée en ce que la coulisse est formée d'une seule pièce et comporte des lèvres d'étanchéité et une pince de fixation sur le montant vertical, cette pince ayant une forme allongée le long du montant vertical et ayant en section une forme en U dont l'ouverture est orientée vers l'intérieur de la porte.

Les caractéristiques de la coulisse permettent de faciliter son montage ainsi que l'assemblage de la porte dans son ensemble. En effet, la coulisse est en un seul morceau et est monté sur le montant vertical grâce à sa pince, en l'engageant sur le montant vertical par translation vers l'intérieur de la porte. Cette opération simple peut être réalisé par un opérateur sans outil particulier par exemple.

La porte selon l'invention peut comprendre une ou plusieurs des caractéristiques suivantes, considérées indépendamment les unes des autres ou en combinaison les unes avec les autres :
-- le montant vertical est un montant vertical arrière ou avant du cadre et de la porte ;
   - la coulisse comprend un logement qui s'étend le long du montant vertical et qui reçoit une partie du guide vitre, ce logement étant adjacent à la pince ;
   - la pince comprend deux parois latérales parallèles qui s'étendent le long du montant vertical et une paroi médiane qui relie les parois latérales entre elles et qui est parallèle et en regard de la face intérieure de la vitre ;
-- l'une des parois latérales de la pince est alignée avec la partie précitée du bord périphérique de la vitre dans un plan perpendiculaire à la vitre ;
-- l'une des parois latérales est située du côté du guide vitre et une seconde des parois latérales est située du côté opposé au guide vitre ;
-- la seconde paroi latérale a une face interne située dans l'ouverture du U et une face externe qui est située dans ledit plan ;
   - le logement est au moins en partie délimité par une première desdites parois latérales et par un prolongement de ladite paroi médiane qui s'étend vers le guide vitre ;
   - le prolongement s'étend parallèlement à la face intérieure de la vitre ;
   - le prolongement comprend une extrémité libre opposée à la première des parois latérales, cette extrémité libre comportant un rebord qui est orienté vers l'intérieur de la porte et qui s'étend le long du montant vertical ;
   - le prolongement et/ou la paroi médiane comprend une face en regard de la face intérieure de la vitre, qui est revêtue d'un flocage et/ou d'un revêtement lisse (par exemple glissant) ou bosselé ;
   - le guide vitre est en appui sur le rebord dans une direction perpendiculaire à la vitre et/ou dans une direction parallèle à la vitre ;
-- le prolongement ou le rebord comprend ou est relié à une lèvre d'étanchéité qui coopère avec le guide vitre ;
   - une seconde desdites parois latérales comprend ou est relié à au moins une lèvre d'étanchéité et/ou à au moins un tube d'étanchéité ;
-- le flocage ou le revêtement lisse ou bosselé s'étend jusque sur ladite au moins une lèvre d'étanchéité ou sur ladite au moins un tube d'étanchéité ;
-- la ou chaque lèvre ou tube d'étanchéité s'étend le long du montant vertical ;
-- la ou l'une des lèvres d'étanchéité de la pince ou de la seconde paroi latérale coopère avec le montant vertical ;
-- la ou l'une des lèvres d'étanchéité de la pince ou de la seconde paroi latérale coopère avec la partie du bord périphérique de la vitre ;
   - la pince comprend un crochet qui est apte à coopérer avec un crevé du montant vertical ;
   - la coulisse comprend en outre une jambe qui s'étend le long du montant vertical et qui est recouverte par la face intérieure de la vitre, cette jambe comportant une extrémité reliée à la pince et une extrémité opposée connectée au montant vertical ou à un enjoliveur intérieur qui recouvre le montant vertical ;
-- la jambe s'étend au moins en partie parallèlement à la face intérieure de la vitre ;
   - la jambe est reliée à une extrémité de l'une des parois latérales de la pince, qui est opposée à l'extrémité de cette paroi latérale qui est reliée à la paroi médiane ;
-- la jambe est reliée à la première des parois latérales ;
-- la jambe s'étend au moins en partie parallèlement audit rebord du prolongement ;
   - le logement est au moins en partie délimité par ladite jambe ;
   - la jambe comprend au moins une lèvre d'étanchéité qui coopère avec la face intérieure de la vitre et/ou avec le guide vitre, et /ou avec le montant vertical, et/ou avec un enjoliveur intérieur qui recouvre le montant vertical ;
   - la jambe comprend un rebord qui est orienté vers la vitre et sur laquelle le guide vitre est apte à venir en appui dans une direction parallèle à la vitre ;
-- le rebord de la jambe est au moins en partie parallèle à l'une des parois latérales ou aux parois latérales de la pince ;
   - la pince est réalisée dans un matériau plus dur que la jambe, la pince étant par exemple réalisée en PP ;
-- les lèvres d'étanchéité sont réalisées dans un matériau plus souple que la pince ;
   - la pince comprend une armature interne ;
      l'armature de la pince s'étend jusque dans le prolongement ; et
-- les lèvres d'étanchéité sont en appui sur la face intérieure de la vitre, et/ou le guide vitre, et/ou le montant vertical, et/ou ladite partie du bord périphérique, et/ou un enjoliveur.

La présente invention concerne également un véhicule, en particulier automobile, comportant une porte telle que décrite ci-dessus et un pied milieu qui s'étend le long du montant vertical lorsque la porte est fermée, la face extérieure de la vitre étant alignée avec une face extérieure d'un autre élément adjacent à ladite partie du bord périphérique de la vitre.

L'élément est de préférence un enjoliveur extérieur ou une vitre fixe qui recouvre au moins en partie le pied milieu. En variante, l'élément est une vitre qui fait partie d'une autre porte du véhicule.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
la figure 1 est une vue schématique en perspective éclatée d'une porte à cadre cachée selon l'invention ;
la figure 2 est une vue schématique en perspective assemblée de la porte à cadre cachée de la figure 1 ;
la figure 3 est une vue schématique partielle d'un véhicule comportant une porte à cadre cachée, dont la vitre de la porte est flush avec un enjoliveur de pied milieu du véhicule ;
la figure 4 est une vue schématique en coupe d'une porte à cadre cachée, et montre un premier mode de réalisation de l'invention ;
la figure 5 est une vue schématique en coupe d'une porte à cadre cachée, et montre un deuxième mode de réalisation de l'invention ;
la figure 6 est une vue schématique en coupe d'une porte à cadre cachée, et montre un troisième mode de réalisation de l'invention ;
la figure 7 est une vue schématique en coupe d'une porte à cadre cachée, et montre un quatrième mode de réalisation de l'invention ;
la figure 8 est une vue schématique en coupe d'une porte à cadre cachée, et montre un cinquième mode de réalisation de l'invention ;
la figure 9 est une vue schématique en coupe d'une porte à cadre cachée, et montre un sixième mode de réalisation de l'invention ;
la figure 10 est une vue schématique partielle d'un véhicule comportant une porte à cadre cachée, dont la vitre de la porte est flush avec une autre vitre du véhicule ;
les figures 11a et 11b sont des vues schématiques en coupe de portes à cadre cachée, et montrent d'autres modes de réalisation de l'invention ;
les figures 12a et 12b sont des vues schématiques en coupe de portes à cadre cachée, et montrent d'autres modes de réalisation de l'invention ;
les figures 13a et 13b sont des vues schématiques en coupe de portes à cadre cachée, et montrent d'autres modes de réalisation de l'invention.

### Description détaillée de l'invention

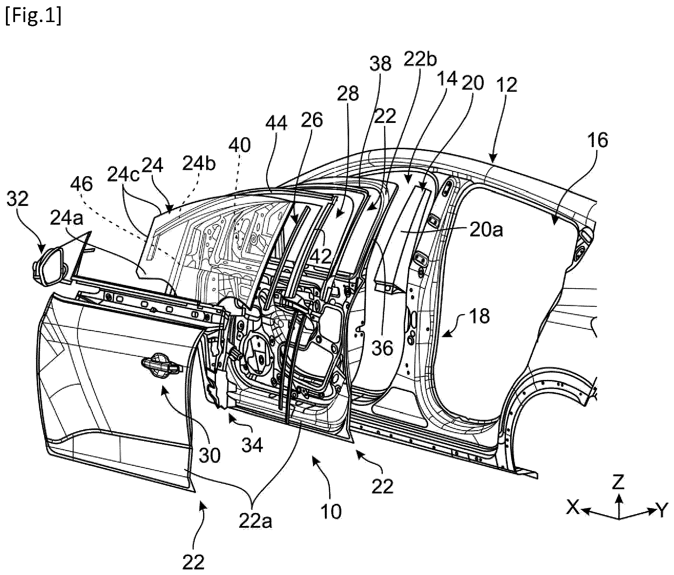

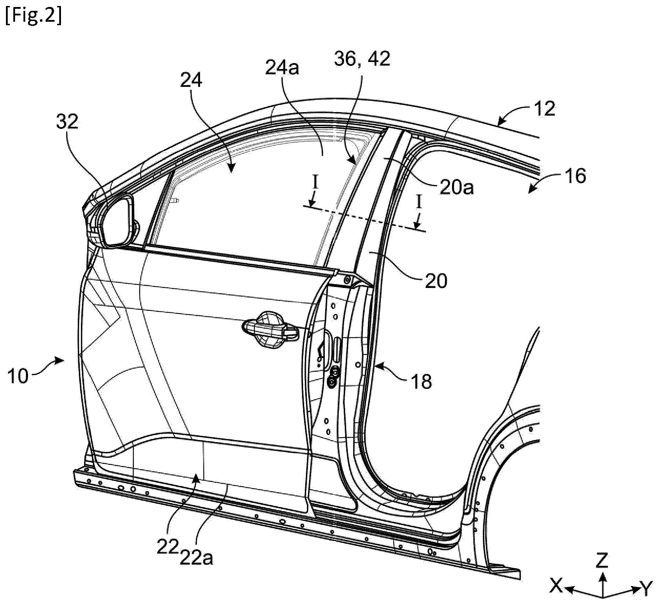

Les figures 1 et 2 montrent une porte 10 à cadre caché ainsi qu'une partie d'un véhicule, en particulier automobile, sur laquelle est montée cette porte 10.

La partie de véhicule est ici une structure 12 destinée à être située sur un côté gauche du véhicule et comportant des logements 14, 16 de montage de portes. L'un des logements 14 est un logement de la porte 10 qui est une porte avant dans l'exemple représenté, et l'autre des logements 16 est un logement d'une porte arrière qui n'est pas représentée dans les dessins.

Les deux logements 14, 16 sont séparés par une colonne de la structure 12, qui est sensiblement verticale et qui est appelée « pied milieu » 18.

On comprend que les portes sont articulées sur la structure 12 pour pouvoir être ouvertes et fermées et ainsi permettre l'accès aux utilisateurs qui pénètrent dans le véhicule à travers les logements 14, 16.

Dans la présente demande, on distingue l'intérieur de l'extérieur du véhicule et on distingue également une direction ou orientation intérieure, orientée donc vers l'intérieur du véhicule, d'une direction ou orientation extérieure, orientée vers l'extérieur du véhicule.

Dans le repère orthogonal XYX, l'axe X est orientée dans le sens longitudinal du véhicule de l'arrière vers l'avant. L'axe Y est orienté vers l'intérieur du véhicule et l'axe Z est orientée vers le haut. Le pied milieu 18 s'étend le long de l'axe Z et peut être parallèle à cet axe.

Pour améliorer l'esthétisme du véhicule, il est connu de monter des enjoliveurs visibles depuis l'extérieur du véhicule. C'est notamment le cas de l'enjoliveur 20 qui est monté sur une partie supérieure du pied milieu 18 au moins et qui recouvre ce pied milieu du côté extérieur au véhicule. L'enjoliveur 20 est fixé au pied milieu par des moyens appropriés. L'enjoliveur 20 comprend une face extérieure 20a visible depuis l'extérieur du véhicule.

L'enjoliveur 20 peut être formé d'une ou plusieurs pièces.

En ce qui concerne la porte 10, elle comporte :
- un bâti 22,
- une vitre mobile 24,
- un guide vitre 26, et
- une coulisse 28.

La porte 10 peut comprendre d'autres éléments tels qu'une poignée 30, un rétroviseur 32, un système 34 d'entraînement de la vitre, qui sont visibles dans les dessins, mais aussi d'autres éléments qui ne sont pas forcément visibles tels qu'un enjoliveur, etc. Le bâti 22 peut être formé par l'assemblage de plusieurs pièces. Le bâti 22 comprend :
- un caisson inférieur 22a, et
- un cadre périphérique supérieur 22b.

Le cadre 22b peut avoir une forme générale en L, V ou U et comprendre au moins un premier montant vertical 36. Le cadre 22b peut en outre comprendre une traverse supérieure 40 et un second montant vertical 38.

Les montants verticaux 36, 38 s'étendent sensiblement le long de l'axe Z depuis le caisson 22a. Les montants verticaux 36, 38 peuvent avoir des longueurs différentes le long de cet axe X, comme c'est le cas dans l'exemple représenté.

La traverse 40 s'étend sensiblement le long de l'axe X entre les montants 36, 38, et en particulier entre leurs extrémités opposées au caisson 22a.

Dans l'exemple représenté, le premier montant vertical 36 est un montant vertical arrière qui est destiné à s'étendre le long du pied milieu 18 lorsque la porte 10 est fermée.

Le caisson inférieur 22a est destinée à être situé dans la partie basse du logement 14 et le cadre 22b est destiné à s'étendre autour du bord du reste du logement 14, lorsque la porte 10 est fermée.

La vitre 24 est mobile depuis une position inférieure dans laquelle elle est au moins en partie logée dans le caisson inférieur 22a, et une position supérieure dans laquelle le cadre 22b est caché par la vitre 24. Les figures 1 et 2 illustrent cette position supérieure.

La vitre 24 comporte une face extérieure 24a orientée vers l'extérieur de la porte 10 et du véhicule, une face intérieure 24b orientée vers l'intérieur de la porte 10 et du véhicule, et un bord périphérique 24c qui s'étend tout autour de la vitre 24 entre ses faces 24a, 24b.

Une partie de la face intérieure 24b de la vitre 24 recouvre entièrement le montant vertical 36.

Une partie du bord périphérique 24c s'étend le long de ce montant 36 lorsque la vitre est dans sa position supérieure.

Le guide vitre 26 est fixé sur la face intérieure 24b de la vitre 24 et s'étend le long de cette partie du bord périphérique 24c.

La coulisse 28 est apte à coopérer avec le guide vitre 26 pour guider la vitre 24 lorsqu'elle se déplace.

La coulisse 28 peut avoir une forme similaire à celle du cadre 22b et avoir une forme générale en L, V ou U. La coulisse 28 peut comprendre une première partie 42 sensiblement verticale qui s'étend le long du montant vertical 36 et qui est fixée à ce dernier.

La coulisse 28 peut en outre comprendre une partie transversale supérieure 44 et une seconde partie 46 sensiblement verticale.

Les parties 42, 46 s'étendent sensiblement le long de l'axe Z. Les parties 42, 46 peuvent avoir des longueurs différentes le long de cet axe Z, comme c'est le cas dans l'exemple représenté.

La partie transversale 44 s'étend sensiblement le long de l'axe X entre les parties 42, 46, et en particulier entre leurs extrémités opposées au caisson 22a. Les extrémités des parties 42, 46 situées du côté du caisson 22a sont destinées à être logées dans ce caisson 22a.

Dans l'exemple représenté, la partie 42 de la coulisse 28 est une partie verticale arrière qui est destinée à s'étendre le long du montant vertical 36, et du pied milieu 18 lorsque la porte 10 est fermée.

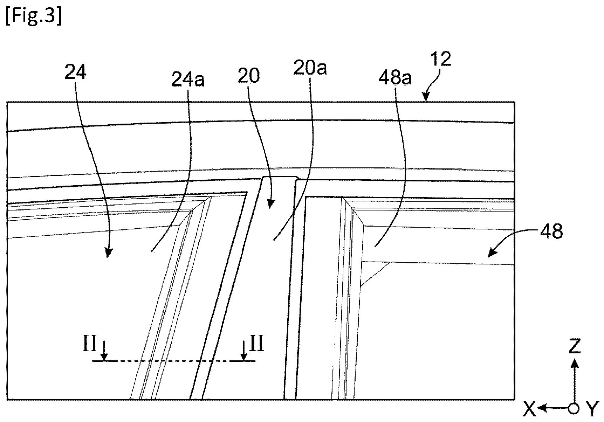

La figure 3 représente un premier cas de figure d'un aspect flush dans lequel la face extérieure 24a de la vitre 24 est alignée avec la face extérieure 20a de l'enjoliveur 20. On voit également sur cette figure que ces faces 24a, 20a peuvent en outre être alignées avec la face extérieure 48a d'une autre vitre 48. Cette vitre 48 est par exemple mobile et fait par exemple partie de la porte précitée de fermeture du logement arrière 16 du véhicule.

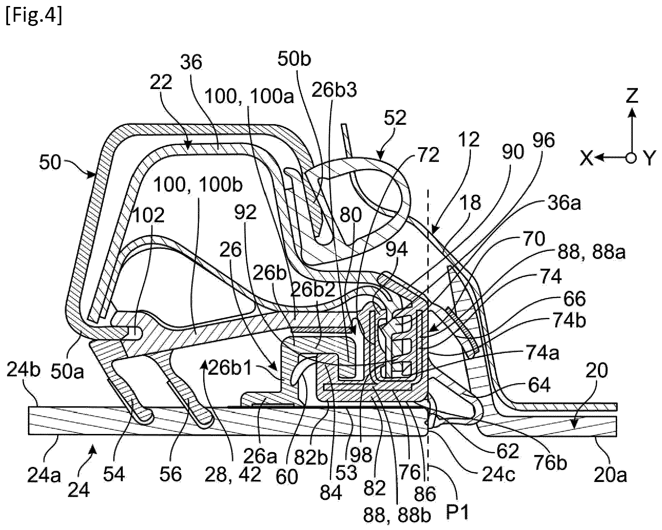

La figure 4 est un vue en coupe selon la ligne I-I de la figure 2 ou II-II de la figure 3 et montre le montage et le positionnement des différentes pièces de la porte 10, de la structure 12, et de l'enjoliveur 20, lorsque cette porte 10 est en position fermée.

Dans cette figure, les pièces déjà décrites dans ce qui précède sont désignées par les mêmes références.

En ce qui concerne le montant vertical 36, il peut comprendre une patte 36a qui est orientée vers l'extérieur tout en étant cachée par la vitre 24, et qui s'étend par ailleurs sensiblement parallèlement à l'axe Z. La patte 36a est de préférence parallèle au plan ZOY.

Dans l'exemple représenté, le montant 36 est recouvert du côté intérieur par un enjoliveur 50 qui est donc visible depuis l'intérieur du véhicule et est destiné à améliorer l'esthétique de l'habitacle du véhicule. Cet enjoliveur 50 peut se présenter sous le forme d'un capotage en U ou C qui est monté par clipsage ou accrochage sur le montant 36. Dans l'exemple représenté, l'enjoliveur 50 comprend deux crochets 50a, 50b de fixation sur le montant 36, ces crochets 50a, 50b s'étendant sur deux bords longitudinaux de l'enjoliveur 50 qui s'étendent le long de l'axe Z. L'un de ces crochets 50a, situé du côté opposé au pied milieu 18, prend appui sur un bord du montant 36, et l'autre de ces crochets 50b est situé du côté du pied milieu 18.

Un système d'étanchéité tel qu'un tube d'étanchéité 52 peut être monté entre le montant 36 et le pied milieu 18, ou entre l'enjoliveur 50 et le pied milieu 18, en particulier au niveau de cet autre crochet 50b.

Un tube d'étanchéité est un élément de forme allongée, qui s'étend ici en particulier le long de l'axe Z, et qui est réalisé dans un matériau souple et déformable apte à coopérer par appui avec au moins une pièce afin d'assurer une étanchéité avec cette pièce. La notion de tube est liée au fait qu'il définit une cavité interne compressible le long de son axe d'allongement.

Le guide vitre 26 est formé d'une seule pièce et comprend en général une base 26a de fixation à la vitre 24, et un doigt 26b de guidage dans la coulisse 28. La base 26a est appliquée sur la face intérieure 24b de la vitre 24 et fixée à celle-ci en général par collage.

Le doigt 26b est en saillie sur la base 26, vers l'intérieur du véhicule, et a une forme générale en L ou U. Le doigt 26b comprend une première paroi 26b1 perpendiculaire à la vitre 24, qui s'étend vers l'intérieur depuis la base 26a, et qui est reliée à une seconde paroi 26b2 parallèle à la vitre 24 et qui s'étend depuis la première paroi 26b1 vers la partie précitée du bord périphérique 24c de la vitre 24. Comme dans l'exemple représenté, le doigt 26b peut comprendre une troisième paroi 26b3 perpendiculaire à la vitre 24, qui s'étend vers l'extérieur depuis la seconde paroi 26b2. Le doigt 26b a ainsi une forme générale en U.

La première paroi 26b1 comprend des faces latérales parallèles entre elles. La seconde paroi 26b2 comprend des faces parallèles, respectivement intérieure et extérieure. La troisième paroi 26b3 comprend des faces latérales parallèles entre elles. La face intérieure 24a de la vitre 24 peut être revêtue d'une couche 53 opaque ou opacifiante réalisée par sérigraphie ou peinture, en particulier au niveau de la zone de fixation du guide vitre 26. La base 26a du guide vitre 26 peut être fixée directement sur cette couche 53. La couche 53 peut s'étendre jusqu'à la partie précitée du bord périphérique 24c.

La coulisse 28 et en particulier sa partie 42 comporte :
- des lèvres d'étanchéité 54, 56, 60, 62, 64, 66, et
- une pince 70 de fixation sur le montant vertical 36.

La particularité de la coulisse 28 et en particulier de sa partie 42 est qu'elle est formée d'une seule pièce, de préférence par extrusion.

La pince 70 a une forme allongée le long du montant vertical 36 et a en section une forme en U dont l'ouverture est orientée vers l'intérieur de la porte 10.

La pince 70 est configurée pour être engagée sur la patte 36a du montant 36.

La pince 70 comprend deux parois latérales parallèles 72, 74 qui s'étendent le long du montant vertical 36 et une paroi médiane 76 qui relie les parois latérales 72, 74 entre elles et qui est parallèle et en regard de la face intérieure 24b de la vitre 24. La forme en U de la pince 70 est définie par ces parois 72, 74, 76.

Les parois 72, 74 sont parallèles au plan ZOY. La paroi 76 est perpendiculaire aux parois 72, 74 et parallèle au plan XOZ.

La pince 70 est cachée par la vitre et la paroi 76 est située à faible distance de la vitre 24. La distance entre la paroi 76 et la face intérieure 24b de la vitre 24 est par exemple inférieure ou égale à 1 cm, et de préférence inférieure ou égale à 5mm.

L'une des parois latérales, à savoir la paroi 72, est située du côté du guide vitre 26, et l'autre des parois latérales, à savoir la paroi 74, est située du côté opposé au guide vitre 26.

La paroi 74 peut être alignée avec la partie précitée du bord périphérique 24c de la vitre, dans un plan P1 perpendiculaire à la vitre 24, comme dans l'exemple représenté. Plus particulièrement, la paroi 74 comprend une face interne 74a située dans l'ouverture du U et une face externe 74b qui est située dans ledit plan P1.

La paroi 72 comprend une face interne 72a située dans l'ouverture du U et une face externe 72b.

La coulisse 28 comprend un logement 80 qui s'étend le long du montant vertical 22 et qui reçoit une partie du guide vitre 26, ce logement 80 étant adjacent à la pince 26.

Le logement 80 est au moins en partie délimité par la paroi 72, et en particulier sa face 72b, ainsi que par un prolongement 82 de la paroi 76 qui s'étend vers le guide vitre 26. Le prolongement 82 s'étend parallèlement à la face intérieure 24b de la vitre 24. La distance entre le prolongement 82 et la face intérieure 24b de la vitre 24 est égale à la distance précitée entre la paroi 76 et la face intérieure 24b de la vitre 24.

Le prolongement 82 comprend une extrémité libre 82a opposée à la paroi 72, cette extrémité libre 82a comportant un rebord 84 qui est orienté vers l'intérieur de la porte 10 et qui s'étend le long du montant vertical 36.

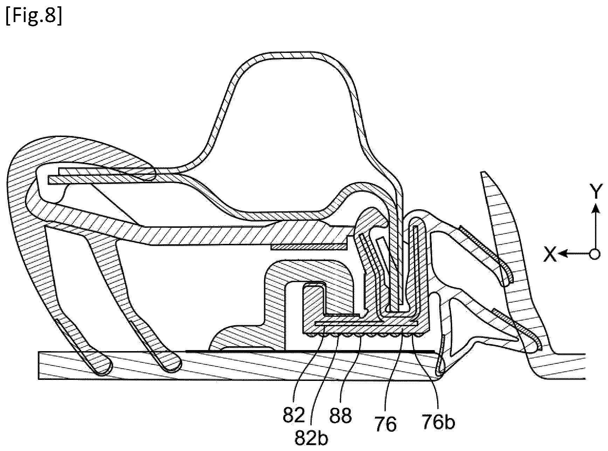

La face extérieure 82b du prolongement 82 et la face extérieure 76b de la paroi 76 s'étendent dans la continuité l'une de l'autre et font face à la face intérieure 24b de la vitre 24. Ces faces 82b, 76b peuvent être revêtues d'un flocage 86 et/ou d'un revêtement qui peut être lisse ou bosselé 88 (figure 8).

Le rebord 84 comprend deux faces latérales parallèles entre elles et au plan ZOY, et une face intérieure qui s'étend entre ces deux faces latérales.

Le rebord 84 peut comprendre ou porter au moins une lèvre d'étanchéité 60 qui coopère par appui avec le guide vitre 26 et par exemple avec l'une des faces latérales de la seconde paroi 26b1.

Le guide vitre 26 est apte à coopérer avec la coulisse 28 afin de guider la vitre 24 lors de ses déplacements. Ce guidage est assuré par appui et coulissement du guide vitre 26 sur la coulisse 28 et en particulier sur son rebord 84 dans l'exemple représenté. Le guide vitre 26 est en appui sur le rebord 84 dans une direction perpendiculaire à la vitre 24 (c'est-à-dire parallèle au plan ZOY) et/ou dans une direction parallèle à la vitre 24 (c'est-à-dire parallèle au plan ZOX).

Dans l'exemple représenté, l'une des faces latérales de la paroi 26b3 du guide vitre 26 est en appui selon l'axe X sur l'une des faces latérales du rebord 84, et la face extérieure de la paroi 26b2 du guide vitre 26 est en appui selon l'axe Y sur la face intérieure du rebord 84 ou intérieure de la jambe 100 qui sera décrite plus en détail dans ce qui suit.

Dans l'exemple représenté, la pince 70 est armée et comprend donc une armature interne 88 qui peut être une âme métallique. Cette armature 88 s'étend de préférence dans les parois 72, 74, 76 de la pince 70 ainsi que dans le prolongement 82. L'armature 88 s'étend le long du montant 36 sur toute la longueur de la coulisse 28 et en particulier de sa partie 42. L'armature 88 peut comprendre une première partie 88a en U située dans les parois 72, 74, 76 de la pince 70, et une autre partie 88b plane s'étendant depuis la paroi 76 jusque dans le prolongement 88. Les parties 88a, 88b sont solidaires l'une de l'autre et par exemple soudées entre elles.

La pince 70 comprend ou porte des lèvres ou tubes d'étanchéité 62, 64, 66, 90, 92.

Les lèvres ou tubes 62, 64, 66, 90 sont situés à l'extérieur de la pince 70 et coopèrent par exemple avec le bord 24c de la vitre, et/ou l'enjoliveur 20, et/ou le pied milieu 18, et/ou le montant 36, et/ou un bord périphérique de la vitre de porte arrière.

La lèvre 62 s'étend par exemple depuis la liaison entre les parois 74, 76 et coopère avec le bord 24c de la vitre 24. La lèvre 64 s'étend par exemple depuis la paroi 74 et coopère avec l'enjoliveur 20. Les lèvres 62, 64 se rejoignent dans l'exemple représenté pour former un tube d'étanchéité.

La lèvre 66 s'étend par exemple depuis l'extrémité de la paroi 74 opposée à la paroi 76, et coopère également avec l'enjoliveur 20. La lèvre 66 s'étend par exemple depuis l'extrémité de la paroi 74 opposée à la paroi 76, et coopère également avec le montant 36.

Les lèvres 92 sont situées à l'intérieur de la pince 70 et s'étendent depuis les faces internes des parois 72, 74 pour coopérer avec la patte 36a. L'une des parois, à savoir la paroi 72 dans l'exemple représenté, comprend de préférence un crochet 94 orienté vers la paroi 74 opposée. Ce crochet 94 est destiné à coopérer avec un crevé 96 de la patte 36a pour améliorer la fixation et en particulier l'ancrage de la coulisse 28 sur le montant 36.

La patte 36a est en appui selon l'axe Y sur la face intérieure de la paroi 76 et/ou selon l'axe X sur la face interne de la paroi 72 ou sur un bossage interne 98 de cette dernière. Dans l'exemple représenté, la coulisse 28 comprend en outre une jambe 100 qui s'étend le long du montant vertical 36 et qui est recouverte par la face intérieure 24b de la vitre 24.

La jambe 100 comporte une extrémité 100a reliée à la pince 70 et une extrémité 100b opposée qui est connectée au montant vertical 36 et/ou à l'enjoliveur 50.

La jambe 100 s'étend au moins en partie parallèlement à la vitre 24 et à sa face intérieure 24b.

Plus particulièrement, la jambe 100 comprend pour l'essentiel deux parties adjacentes, à savoir une partie 100a située du côté de la pince 70 et une partie 100b située du côté opposé.

La partie 100a est parallèle à la vitre 24 et à sa face intérieure 24b et définit au moins en partie le logement 80. La partie 100 est parallèle au prolongement 82 et s'étend à une distance selon l'axe Y du rebord 84 qui est définie de façon à pouvoir monter et faire coulisser le guide vitre 26 dans le logement 80. La face de cette partie 100a orientée vers l'extérieur et vers le guide vitre 26 peut être revêtue d'un flocage. La face de cette partie 100a orientée vers l'intérieur peut être en appui selon l'axe Y sur le montant 36.

La jambe 100 et en particulier sa partie 100a est reliée à la pince 70 au niveau de l'extrémité libre de sa paroi 72, opposée à la paroi 76. La liaison entre la jambe 100 et la pince 70 est de préférence amincie et comprend donc un amincissement de son épaisseur selon l'axe Y.

La jambe 100 et en particulier sa partie 100b comprend, du côté opposé à la pince 70, une encoche 102 dans laquelle est engagé le crochet 50a de l'enjoliveur 50. Cette encoche 102 débouche par exemple dans une direction parallèle à l'axe X et du côté opposé à la pince 70.

La partie 100b de la jambe 100 peut être légèrement inclinée par rapport à la partie 100a et peut comprendre des lèvres d'étanchéité 54, 56 qui coopèrent par appui avec la face intérieure 24b de la vitre 24 et/ou le guide vitre 26, par exemple au niveau de sa base 26a.

Les lèvres d'étanchéité 54, 56, mais aussi au moins certaines des lèvres d'étanchéité 60, 62, 64, 66, 90, 92 sont réalisés dans un matériau plus souple que la pince 70, et/ou la jambe 100.

Lors de l'assemblage de la porte 10, la coulisse 28 peut être prémontée sur la vitre 24 en engageant le guide vitre 26 dans le logement 82 de la coulisse 28. L'ensemble est monté sur le bâti 22 de la porte 10. puis la pince 70 est montée sur la patte 36a en exerçant une force sur la vitre 24 vers l'intérieur dans une direction selon l'axe Y, jusqu'à ce que le crochet 94 de la pince 70 s'engage ou coopère avec le crevé 96 de la patte 36a. L'enjoliveur 50 est assemblé à une étape ultérieure une fois la coulisse 28 dans sa position finale. Le crochet 50a de l'enjoliveur 50 est alors engagé dans l'encoche 102 de la coulisse 28 et le cas échéant dans un logement du tube 52.

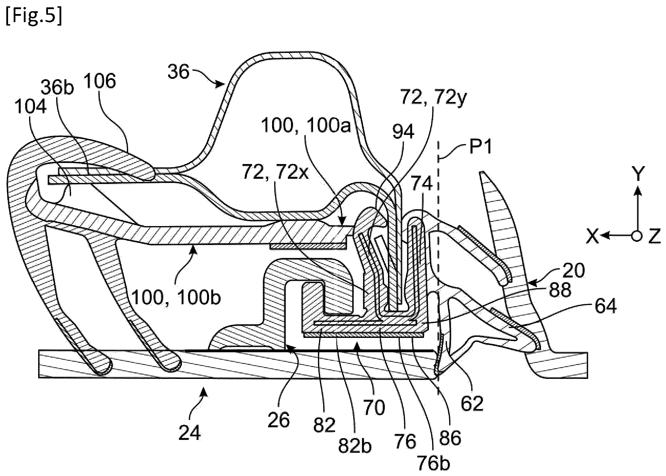

Les figures 5 à 9 illustrent des variantes de réalisation de la porte 10.

La description qui suit se focalise sur les différences entre ces variantes et le mode de réalisation de la figure 4. On peut donc considérer que la description de la figure 4 s'applique aux figures 5 à 9 dans la mesure où elle ne contredit pas ce qui suit. Dans les figures 5 à 9, l'enjoliveur 50 est absent ou n'est pas représenté.

La jambe 100 et en particulier sa partie 100b comprend, du côté opposé à la pince 70, un bossage 104 d'appui sur le montant 36, l'appui étant réalisé vers l'intérieur selon l'axe Y. La jambe 100 et en particulier sa partie 100b comprend en outre une lèvre de fixation et d'étanchéité 106 qui s'étend depuis l'extrémité libre de la jambe 100, opposée à la pince 70, et qui est recourbée en direction de la pince 70 pour venir en appui sur le montant 36, l'appui étant réalisé vers l'extérieur selon l'axe Y.

On voit sur les dessins que le montant 36 comprend une seconde patte 36b qui est orientée dans l'axe X vers le côté opposé à la patte 36a, et qui est intercalée entre le bossage 104 et la lèvre 106.

Dans les figures 5 à 9, on voit également que la paroi 72 de la pince 70 comprend une partie extérieure 72x, reliée à la paroi 72, qui est perpendiculaire à la paroi 76 et à la vitre 24, et une partie intérieure 72y qui s'étend depuis la partie extérieure 72x vers l'intérieur et qui est inclinée pour augmenter la dimension transversale de l'ouverture du U de la pince 70 au niveau des extrémités libres des parois 72, 74. Le crochet 94 est situé à l'extrémité libre de cette partie intérieure 72y inclinée.

Dans les figures 5 à 9, on voit également que la paroi 74 est écartée du plan P1 passant par la partie du bord périphérique 24c de la vitre 24. La distance entre la face externe de la paroi 74 et le plan P1 est de préférence inférieure ou égale à 1cm, et par exemple inférieure ou égale à 5mm, cette distance étant mesurée selon l'axe X.

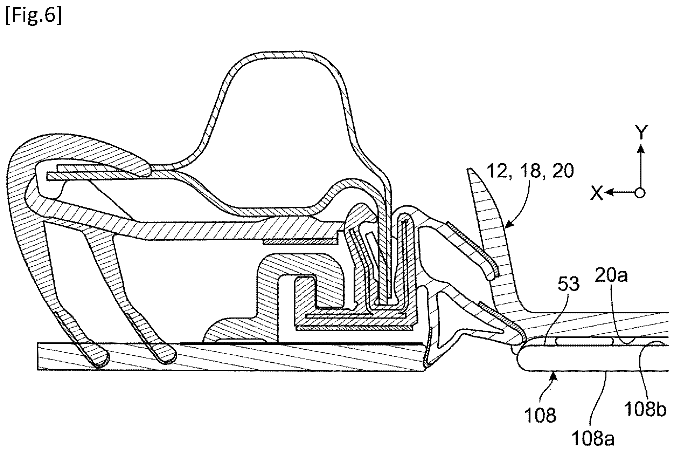

La variante de la figure 6 diffère de celle de la figure 5 en ce que l'enjoliveur 20 porte, au niveau de sa face extérieure 20a, une vitre fixe 108 dont la face extérieure 108a est alignée et donc flush avec la face extérieure 24a de la vitre 24. La vitre 108 peut être fixée par collage sur l'enjoliveur 20 par exemple. De préférence, la vitre 108 est recouverte sur sa face intérieure 108b d'une couche 53 d'occultation telle que de la sérigraphie ou de la peinture, de façon à masquer l'enjoliveur 20.

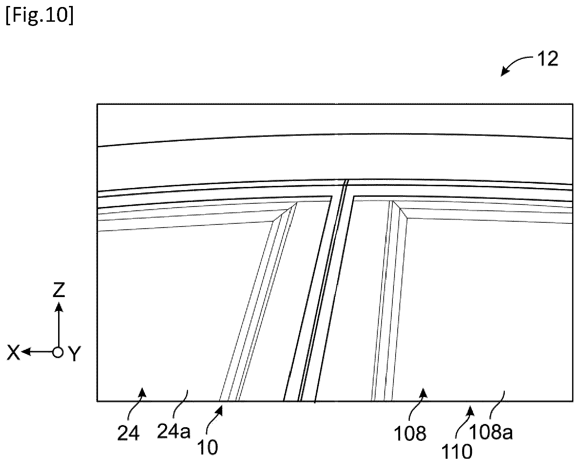

En variante, la vitre 108 pourrait être fixée directement sur le pied milieu 18 de la structure 12 ou pourrait faite partie d'une porte arrière 110 du véhicule comme c'est le cas à la figure 10. Dans ce cas, la portion de vitre occultée par la peinture / sérigraphie 18 est limitée à une largeur permettant de masquer la zone en vis-à-vis du pied milieu 18 et du cadre de la porte arrière 110.

En variante, la vitre 108 pourrait être fixée directement sur le pied milieu 18.

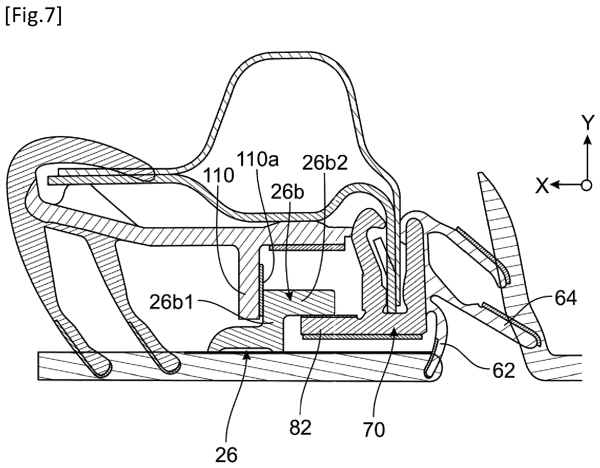

La variante de la figure 7 illustre quelques différences par rapport aux variantes des figures 4 et 5.

Une première différence concerne le guide vitre 26. Le doigt 26 du guide vitre 26 comprend des parois 26b1, 26b2 mais ne comprend pas de paroi 26b3. Le doigt 26 a ainsi une forme générale en L plutôt qu'en U.

Une autre différence concerne le prolongement 82 de la pince 70 qui ne comprend pas de rebord 84. La paroi 26b2 du guide vitre 26 est en appui sur la face intérieure du prolongement 82, vers l'extérieur selon l'axe Y.

Par ailleurs, la jambe 100 comprend un rebord 110 qui est orienté vers la vitre 24 et sur laquelle le guide vitre 26 est apte à venir en appui dans une direction parallèle à la vitre 24.

Le rebord 110 s'étend vers l'extérieur depuis la jambe 100, dans un plan ZOY. Le rebord comprend deux faces latérales, dont une est orientée vers la pince 70 est définit en partie le logement 80 de réception du guide vitre 26. La face latérale 110a interne de ce rebord 110, qui débouche dans le logement 80, peut comprendre un flocage.

La face latérale de la paroi 26b1 du guide vitre 26, opposée à la pince 70, est en appui sur le rebord 110 et en particulier sur sa face 110a ou son flocage, selon l'axe X.

Par ailleurs, comme cela est visible à la figure 7 également, la pince 70 peut ne pas être armée mais plutôt réalisée dans un matériau plus dur que le reste de la coulisse 28, et en particulier sa jambe 100. La pince 70 avec son prolongement 82 est par exemple réalisée en PP.

La variante de la figure 8 diffère de celle de la figure 5 en ce que la face extérieure 82b du prolongement 82 et la face extérieure 76b de la paroi 76 sont revêtues d'un flocage 86 à la figure 5 et d'un revêtement bosselé 88 à la figure 8.

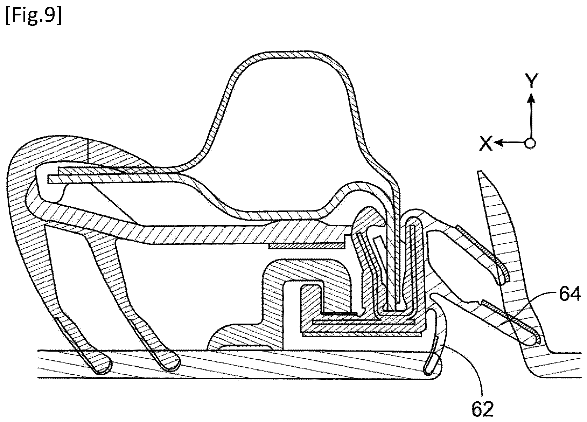

La variante de la figure 9 diffère de celle de la figure 5 en ce que les lèvres 62, 64 se rejoignent à la figure 5 pour former un tube d'étanchéité, et restent indépendantes à la figure 8. C'est également le cas des lèvres 62, 64 de la figure 7 qui sont indépendantes l'une de l'autre.

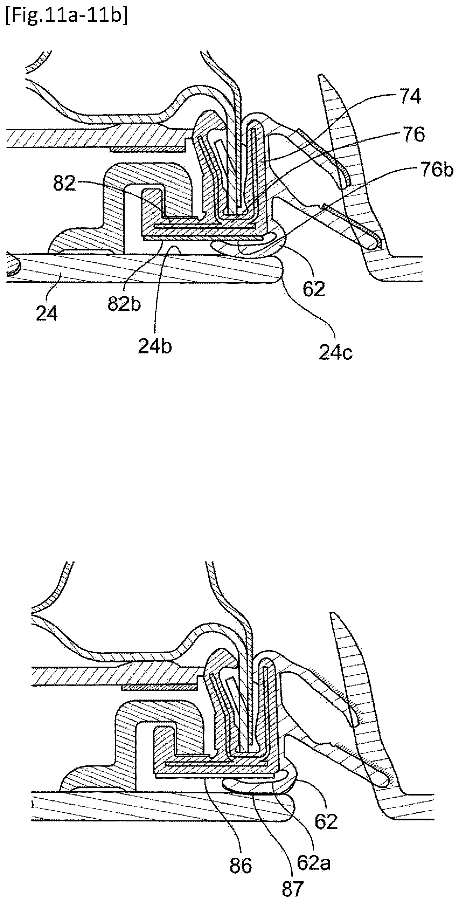

Les figures 11a-11b et suivantes illustres d'autres variantes de réalisation de l'invention.

Dans les figures 11a et 11b, la lèvre 62 s'étend par exemple depuis la liaison entre les parois 74, 76 et ne coopère pas avec le bord 24c de la vitre 24. Elle est à la place intercalée entre la face extérieure 82b du prolongement 82 et/ou la face extérieure 76b de la paroi 76, d'une part, et la face intérieure 24b de la vitre 24. La lèvre 62 est en contact à la fois avec la face extérieure 82b du prolongement 82 et/ou la face extérieure 76b de la paroi 76, d'une part, et la face intérieure 24b de la vitre 24. La lèvre 62 peut avoir une forme générale incurvée.

Par ailleurs, dans la figure 11b, la lèvre 62 est revêtue, du côté de la vitre 24, avec un flocage 87 et/ou un revêtement qui peut être lisse ou bosselé, et qui peut être identique ou différent du flocage 86 et/ou du revêtement précité. La lèvre 62 est ainsi en contact avec la face intérieure 24b de la vitre 24 par l'intermédiaire du flocage 87 ou du revêtement.

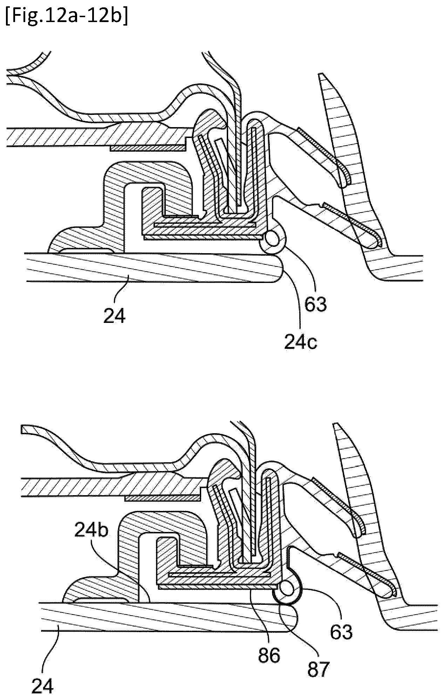

Dans les figures 12a et 12b, la lèvre 62 est remplacée par un tube d'étanchéité 63 qui a par exemple une forme générale cylindrique. Le tube 63 peut par exemple comprendre un côté aligné avec le bord 24c de la vitre 24, comme dans l'exemple représenté.

Par ailleurs, dans la figure 12b, le tube 62 est revêtu, du côté de la vitre 24, avec un flocage 87 et/ou un revêtement qui peut être lisse ou bosselé, et qui peut être identique ou différent du flocage 86 et/ou du revêtement précité. Le tube 63 est ainsi en contact avec la face intérieure 24b de la vitre 24 par l'intermédiaire du flocage 87 ou du revêtement. Le flocage 87 ou le revêtement du tube 63 peut s'étendre dans la continuité (sans interruption) du flocage 86 ou du revêtement précité.

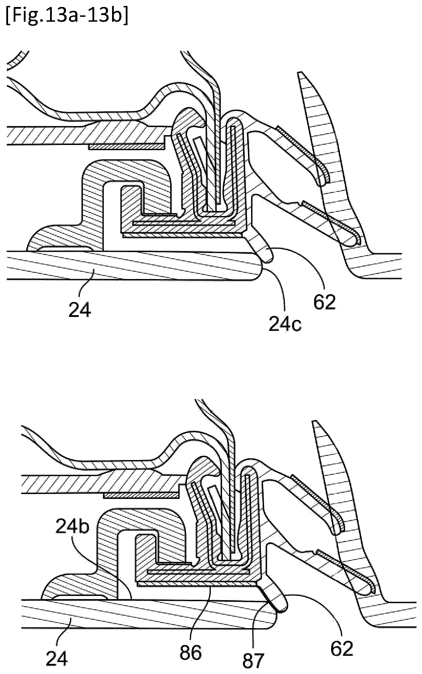

Dans les figures 13a et 13b, la lèvre 62 est plus courte que dans les figures 11a et 11b et prend appui sur le bord 24c de la vitre 24.

Par ailleurs, dans la figure 13b, la lèvre 62 est revêtue, du côté de la vitre 24, avec un flocage 87 et/ou un revêtement qui peut être lisse ou bosselé, et qui peut être identique ou différent du flocage 86 et/ou du revêtement précité. La lèvre 64 est ainsi en contact avec le bord 24c de la vitre 24 par l'intermédiaire du flocage 87 ou du revêtement. Le flocage 87 ou le revêtement du tube 63 peut s'étendre dans la continuité (sans interruption) du flocage 86 ou du revêtement précité.

## Revendications

1. Porte (10) à cadre caché pour un véhicule, en particulier automobile, cette porte (10) comportant :
- un bâti (22) comportant un caisson inférieur (22a) et un cadre périphérique supérieur (22b) qui comprend un montant vertical (36),
- une vitre (24) mobile depuis une position inférieure dans laquelle elle est au moins en partie logée dans le caisson inférieur (22a), et une position supérieure dans laquelle le cadre (22b) est caché par la vitre (24), la vitre (24) comportant une face extérieure (24a) orientée vers l'extérieur de la porte (10), une face intérieure (24a) orientée vers l'intérieur de la porte (10), et un bord périphérique (24c), une partie de la face intérieure (24b) recouvrant entièrement le montant vertical (36) et une partie du bord périphérique (24c) s'étendant le long de ce montant (36) lorsque la vitre (24) est dans sa position supérieure,
- un guide vitre (26) fixé sur la face intérieure (24b) de la vitre (24) et s'étendant le long de cette partie du bord périphérique (24c), et
- une coulisse (28) dont une partie (42) est fixée sur le montant vertical (36) et apte à coopérer avec le guide vitre (26) pour guider la vitre (24) lorsqu'elle se déplace, **caractérisée en ce que** la coulisse (28) est formée d'une seule pièce et comporte des lèvres d'étanchéité (54, 56, 60, 62, 64, 66, etc.) et une pince (70) de fixation sur le montant vertical (36), cette pince (70) ayant une forme allongée le long du montant vertical (36) et ayant en section une forme en U dont l'ouverture est orientée vers l'intérieur de la porte (10).

2. Porte (10) selon la revendication 1, dans laquelle la coulisse (28) comprend un logement (80) qui s'étend le long du montant vertical (36) et qui reçoit une partie du guide vitre (26), ce logement (80) étant adjacent à la pince (70).

3. Porte (10) selon la revendication 1 ou 2, dans laquelle la pince (70) comprend deux parois latérales (72, 74) parallèles qui s'étendent le long du montant vertical (36) et une paroi médiane (76) qui relie les parois latérales (72, 74) entre elles et qui est parallèle et en regard de la face intérieure (24b) de la vitre (24).

4. Porte (10) selon l'ensemble des revendications 2 et 3, dans laquelle le logement (80) est au moins en partie délimité par une première desdites parois latérales (72) et par un prolongement (82) de ladite paroi médiane (76) qui s'étend vers le guide vitre (26).

5. Porte (10) selon la revendication 4, dans laquelle le prolongement (82) s'étend parallèlement à la face intérieure (24b) de la vitre (24).

6. Porte (10) selon la revendication 4 ou 5, dans laquelle le prolongement (82) comprend une extrémité libre opposée à la première des parois latérales (72), cette extrémité libre comportant un rebord (84) qui est orienté vers l'intérieur de la porte (10) et qui s'étend le long du montant vertical (36).

7. Porte (10) selon l'une des revendications 4 à 6, dans laquelle le prolongement (82) et/ou la paroi médiane (76) comprend une face (82b) en regard de la face intérieure (24b) de la vitre (24), qui est revêtue d'un flocage (86) et/ou d'un revêtement lisse ou bosselé (88).

8. Porte (10) selon la revendication 6 ou 7, dans laquelle le guide vitre (26) est en appui sur le rebord (84) dans une direction perpendiculaire à la vitre (24) et/ou dans une direction parallèle à la vitre (24).

9. Porte (10) selon l'une des revendications 4 à 7, dans laquelle une seconde desdites parois latérales (74) comprend ou est relié à au moins une lèvre d'étanchéité (62, 64, 66) et/ou à au moins un tube d'étanchéité (63).

10. Porte (10) selon l'une des revendications précédentes, dans laquelle la pince (70) comprend un crochet (94) qui est apte à coopérer avec un crevé (96) du montant vertical (36).

11. Porte (10) selon l'une des revendications précédentes, dans laquelle la coulisse (28) comprend en outre une jambe (100) qui s'étend le long du montant vertical (36) et qui est recouverte par la face intérieure (24b) de la vitre (24), cette jambe (100) comportant une extrémité reliée à la pince (70) et une extrémité opposée connectée au montant vertical (36) ou à un enjoliveur intérieur (50) qui recouvre le montant vertical (36).

12. Porte (10) selon la revendication 11, en dépendance de l'une des revendications 3 à 9, dans laquelle la jambe (100) est reliée à une extrémité de l'une des parois latérales (72) de la pince (70), qui est opposée à l'extrémité de cette paroi latérale (72) qui est reliée à la paroi médiane (76).

13. Porte (10) selon la revendication 11 ou 12, en combinaison avec la revendication 2, dans laquelle le logement (80) est au moins en partie délimité par ladite jambe (100).

14. Porte (10) selon l'une des revendications 11 à 13, dans laquelle la jambe (100) comprend au moins une lèvre d'étanchéité (54, 56) qui coopère avec la face intérieure (24b) de la vitre (24) et/ou avec le guide vitre (26), et /ou avec le montant vertical (36), et/ou avec un enjoliveur intérieur (50) qui recouvre le montant vertical (36).

15. Porte (10) selon l'une des revendications 11 à 14, dans laquelle la jambe (100) comprend un rebord (110) qui est orienté vers la vitre (24) et sur laquelle le guide vitre (26) est apte à venir en appui dans une direction parallèle à la vitre (24).

16. Porte (10) selon l'une des revendications 11 à 15, dans laquelle la pince (70) est réalisée dans un matériau plus dur que la jambe (100), la pince étant par exemple réalisée en PP.

17. Porte (10) selon l'une des revendications précédentes, dans laquelle la pince (70) comprend une armature interne (88).

18. Véhicule, en particulier automobile, comportant une porte (10) selon l'une des revendications précédentes et un pied milieu (18) qui s'étend le long du montant vertical (36) lorsque la porte (10) est fermée, la face extérieure (24a) de la vitre (24) étant alignée avec une face extérieure (20a, 108a) d'un autre élément adjacent à ladite partie du bord périphérique (24c) de la vitre (24).

19. Véhicule selon la revendication 18, dans lequel l'élément est un enjoliveur extérieur (20) ou une vitre fixe (108) qui recouvre au moins en partie le pied milieu (18).

20. Véhicule selon la revendication 18, dans lequel l'élément est une vitre qui fait partie d'une autre porte (110) du véhicule.

## Patentansprüche

1. Tür (10) mit verstecktem Rahmen für ein Fahrzeug, insbesondere ein Automobil, wobei diese Tür (10) umfasst:
- ein Gestell (22), umfassend einen unteren Kasten (22a) und einen oberen umlaufenden Rahmen (22b), der eine vertikale Strebe (36) beinhaltet,
- eine Scheibe (24), die von einer unteren Position, in der sie mindestens zum Teil in dem unteren Kasten (22a) aufgenommen ist, und einer oberen Position, in der der Rahmen (22b) von der Scheibe (24) verborgen ist, beweglich ist, wobei die Scheibe (24) eine äußere Fläche (24a), die zu der Außenseite der Tür (10) hin orientiert ist, eine innere Fläche (24a), die zu der Innenseite der Tür (10) hin orientiert ist, und eine umlaufende Kante (24c) umfasst, wobei ein Teil der inneren Fläche (24b) die vertikale Strebe (36) vollständig bedeckt und ein Teil der umlaufenden Kante (24c) sich entlang dieser Strebe (36) erstreckt, wenn die Scheibe (24) in ihrer oberen Position vorliegt,
- eine auf der inneren Fläche (24b) der Scheibe (24) fixierte und sich entlang dieses Teils der umlaufenden Kante (24c) erstreckende Scheibenführung (26) und
- eine Führungsschiene (28), von der ein Teil (42) an der vertikalen Strebe (36) fixiert und in der Lage ist, mit der Scheibenführung (26) zusammenzuwirken, um die Scheibe (24) zu führen, wenn sie verschoben wird, **dadurch gekennzeichnet, dass** die Führungsschiene (28) aus einem einzigen Stück gebildet ist und Dichtungslippen (54, 56, 60, 62, 64, 66 usw.) und eine Klemme (70) zur Fixierung an der vertikalen Strebe (36) umfasst, wobei diese Klemme (70) entlang der vertikalen Strebe (36) eine längliche Form aufweist und im Querschnitt eine U-Form aufweist, von der die Öffnung zu der Innenseite der Tür (10) hin orientiert ist.

2. Tür (10) nach Anspruch 1, wobei die Führungsschiene (28) ein Gehäuse (80) beinhaltet, das sich entlang der vertikalen Strebe (36) erstreckt und ein Teil der Scheibenführung (26) aufnimmt, wobei dieses Gehäuse (80) der Klemme (70) benachbart vorliegt.

3. Tür (10) nach Anspruch 1 oder 2, wobei die Klemme (70) zwei parallele Seitenwände (72, 74), die sich entlang der vertikalen Strebe (36) erstrecken, und eine mittlere Wand (76) beinhaltet, die die Seitenwände (72, 74) untereinander verbindet und die parallel und gegenüber der inneren Fläche (24b) der Scheibe (24) vorliegt.

4. Tür (10) nach der Gesamtheit von Ansprüchen 2 und 3, wobei das Gehäuse (80) mindestens zum Teil durch eine erste der Seitenwände (72) und durch eine Verlängerung (82) der mittleren Wand (76), die sich zu der Scheibenführung (26) hin erstreckt, abgegrenzt ist.

5. Tür (10) nach Anspruch 4, wobei sich die Verlängerung (82) parallel zu der inneren Fläche (24b) der Scheibe (24) erstreckt.

6. Tür (10) nach Anspruch 4 oder 5, wobei die Verlängerung (82) ein der ersten der Seitenwände (72) gegenüberliegendes freies Ende beinhaltet, wobei dieses freie Ende einen Rand (84) umfasst, der zu der Innenseite der Tür (10) hin orientiert ist und der sich entlang der vertikalen Strebe (36) erstreckt.

7. Tür (10) nach Anspruch 4 bis 6, wobei die Verlängerung (82) und/oder die mittlere Wand (76) eine Fläche (82b) gegenüber der inneren Fläche (24b) der Scheibe (24) beinhaltet, die mit einer Beflockung (86) und/oder einer glatten oder unebenen Beschichtung (88) beschichtet ist.

8. Tür (10) nach Anspruch 6 oder 7, wobei die Scheibenführung (26) an dem Rand (84) in einer Richtung senkrecht zu der Scheibe (24) und/oder in einer Richtung parallel zu der Scheibe (24) anliegt.

9. Tür (10) nach einem der Ansprüche 4 bis 7, wobei eine zweite der Seitenwände (74) mindestens eine Dichtungslippe (62, 64, 66) und/oder mindestens ein Dichtungsrohr (63) beinhaltet oder damit verbunden ist.

10. Tür (10) nach einem der vorstehenden Ansprüche, wobei die Klemme (70) einen Haken (94) beinhaltet, der in der Lage ist, mit einem Kragen (96) der vertikalen Strebe (36) zusammenzuwirken.

11. Tür (10) nach einem der vorstehenden Ansprüche, wobei die Führungsschiene (28) weiter einen Schenkel (100) beinhaltet, der sich entlang der vertikalen Strebe (36) erstreckt und der durch die innere Fläche (24b) der Scheibe (24) bedeckt wird, wobei dieser Schenkel (100) ein mit der Klemme (70) verbundenes Ende und ein gegenüberliegendes Ende umfasst, das mit der vertikalen Strebe (36) oder mit einem inneren Zierrahmen (50) verbunden ist, der die vertikalen Strebe(36) bedeckt.

12. Tür (10) nach Anspruch 11, in Abhängigkeit von einem der Ansprüche 3 bis 9, wobei der Schenkel (100) mit einem Ende von einer der Seitenwände (72) der Klemme (70) verbunden ist, das dem Ende dieser Seitenwand (72), das mit der mittleren Wand (76) verbunden ist, gegenüberliegt.

13. Tür (10) nach Anspruch 11 oder 12, in Kombination mit Anspruch 2, wobei das Gehäuse (80) mindestens zum Teil durch den Schenkel (100) abgegrenzt wird.

14. Tür (10) nach einem der Ansprüche 11 bis 13, wobei der Schenkel (100) mindestens eine Dichtungslippe (54, 56) beinhaltet, die mit der inneren Fläche (24b) der Scheibe (24) und/oder mit der Scheibenführung (26) und/oder mit der vertikalen Strebe (36) und/oder mit einer inneren Zierleiste (50), die die vertikale Strebe (36) bedeckt, zusammenwirkt.

15. Tür (10) nach einem der Ansprüche 11 bis 14, wobei der Schenkel (100) einen Rand (110) beinhaltet, der zu der Scheibe (24) hin orientiert ist, und an dem die Scheibenführung (26) in der Lage ist, in einer Richtung parallel zu der Scheibe (24) in Anlage zu kommen.

16. Tür (10) nach einem der Ansprüche 11 bis 15, wobei die Klemme (70) aus einem härteren Material als der Schenkel (100) hergestellt ist, wobei die Klemme zum Beispiel aus PP hergestellt ist.

17. Tür (10) nach einem der vorstehenden Ansprüche, wobei die Klemme (70) eine innere Armatur beinhaltet.

18. Fahrzeug, insbesondere ein Automobil, umfassend eine Tür (10) nach einem der vorstehenden Ansprüche und eine B-Säule (18), die sich entlang der vertikalen Strebe (36) erstreckt, wenn die Tür (10) geschlossen ist, wobei die äußere Fläche (24a) der Scheibe (24) mit einer äußeren Fläche (20a, 108a) eines anderen Elements ausgerichtet ist, das zu dem Teil der umlaufenden Kante (24c) der Scheibe (24) benachbart vorliegt.

19. Fahrzeug nach Anspruch 18, wobei das Element eine äußere Zierleiste (20) oder eine fixierte Scheibe (108) ist, die mindestens zum Teil die B-Säule (18) bedeckt.

20. Fahrzeug nach Anspruch 18, wobei das Element eine Scheibe ist, die einen Teil einer anderen Tür (110) des Fahrzeugs ausmacht.

## Claims

1. A hidden framed door (10) for a vehicle, in particular a motor vehicle, this door (10) comprising:
- a framework (22) comprising a lower box (22a) and an upper peripheral frame (22b) which includes a vertical post (36),
- a movable window (24), movable from a lower position in which it is at least partly housed in the lower box (22a), and an upper position in which the frame (22b) is hidden by the window (24), the window (24) comprising an exterior face (24a) directed towards the exterior of the door (10), an interior face (24a) directed towards the interior of the door (10), and a peripheral edge (24c), a part of the interior face (24b) completely covering the vertical post (36) and part of the peripheral edge (24c) extending along this post (36) when the window (24) is in its upper position,
- a window guide (26) fixed to the interior face (24b) of the window (24) and extending along this part of the peripheral edge (24c), and
- a slide (28), a part (42) of which is fixed to the vertical post (36) and can cooperate with the window guide (26) to guide the window (24) as it moves,
**characterised in that** the slide (28) is formed in a single piece and comprises sealing lips (54, 56, 60, 62, 64, 66, etc.) and a fixing clamp (70) on the vertical post (36), this clamp (70) having an elongate shape along the vertical post (36) and having a U-shaped cross-section, the opening of which is oriented towards the interior of the door (10).

2. The door (10) according to claim 1, wherein the slide (28) comprises a housing (80) which extends along the vertical post (36) and which receives a part of the window guide (26), this housing (80) being adjacent to the clamp (70).

3. The door (10) according to claim 1 or 2, wherein the clamp (70) comprises two parallel lateral walls (72, 74) which extend along the vertical post (36) and a median wall (76) which connects the lateral walls (72, 74) together and which is parallel to and facing the interior face (24b) of the window (24).

4. The door (10) according to all of claims 2 and 3, wherein the housing (80) is at least partly delimited by a first of said lateral walls (72) and by an extension (82) of said median wall (76) which extends towards the window guide (26).

5. The door (10) according to claim 4, wherein the extension (82) extends parallel to the interior face (24b) of the window (24).

6. The door (10) according to claim 4 or 5, wherein the extension (82) comprises a free end opposite the first of the lateral walls (72), this free end comprising a rim (84) which is oriented towards the interior of the door (10) and which extends along the vertical post (36).

7. The door (10) according to one of claims 4 to 6, wherein the extension (82) and/or the median wall (76) comprises a face (82b) facing the interior face (24b) of the window (24), which is coated with a flocking (86) and/or a smooth or embossed coating (88).

8. The door (10) according to claim 6 or 7, wherein the window guide (26) rests on the rim (84) in a direction perpendicular to the window (24) and/or in a direction parallel to the window (24).

9. The door (10) according to one of claims 4 to 7, wherein a second of said lateral walls (74) comprises or is connected to at least one sealing lip (62, 64, 66) and/or at least one sealing tube (63).

10. The door (10) according to one of the preceding claims, wherein the clamp (70) comprises a hook (94) which is able to cooperate with a punched hole (96) of the vertical post (36).

11. The door (10) according to one of the preceding claims, wherein the slide (28) further comprises a leg (100) which extends along the vertical post (36) and which is covered by the interior face (24b) of the window (24), this leg (100) comprising one end connected to the clamp (70) and an opposite end connected to the vertical post (36) or to an interior hubcap (50) which covers the vertical post (36).

12. The door (10) according to claim 11, dependent on one of claims 3 to 9, wherein the leg (100) is connected to an end of one of the lateral walls (72) of the clamp (70), which is opposite the end of this lateral wall (72) which is connected to the median wall (76).

13. The door (10) according to claim 11 or 12, in combination with claim 2, wherein the housing (80) is at least partly delimited by said leg (100).

14. The door (10) according to one of claims 11 to 13, wherein the leg (100) comprises at least one sealing lip (54, 56) which cooperates with the interior face (24b) of the window (24) and/or with the window guide (26), and/or with the vertical post (36), and/or with an interior hubcap (50) which covers the vertical post (36).

15. The door (10) according to one of claims 11 to 14, wherein the leg (100) comprises a rim (110) which is oriented towards the window (24) and on which the window guide (26) is able to bear in a direction parallel to the window (24).

16. The door (10) according to one of claims 11 to 15, wherein the clamp (70) is made of a harder material than the leg (100), the clamp being made of PP, for example.

17. The door (10) according to one of the preceding claims, wherein the clamp (70) comprises an inner armature (88).

18. A vehicle, in particular motor vehicle, comprising a door (10) according to one of the preceding claims and a centre pillar (18) which extends along the vertical post (36) when the door (10) is closed, the exterior face (24a) of the window (24) being aligned with an exterior face (20a, 108a) of another element adjacent to said part of the peripheral edge (24c) of the window (24).

19. The vehicle according to claim 18, wherein the element is an exterior hubcap (20) or a fixed window (108) which at least partially covers the centre pillar (18).

20. The vehicle according to claim 18, wherein the element is a window which forms part of another door (110) of the vehicle.
